# EUROPÄISCHE PATENTANMELDUNG

(11) **EP 0 558 880 A1**
(43) Veröffentlichungstag der Anmeldung: **08.09.1993**
(21) Anmeldenummer: 92890194.1
(22) Anmeldetag: 16.09.1992
(51) Int. Cl.: B27L 11/00

(54) **Nachschleifbares Spanermesser**

(30) Priorität: 16.09.1991 AT 1854/91
(71) Anmelder: BÖHLER YBBSTALWERKE Ges.m.b.H., A-3333 Böhlerwerk (AT)
(72) Erfinder: Rosenkranz, Gerhard Dkfm., A-2380 Perchtoldsdorf (AT); Berger, Friedrich, A-3332 Rosenau (AT)
(74) Vertreter: Brauneiss, Leo, Dipl.Ing.

(57) **Zusammenfassung**

Die Erfindung betrifft ein nachschleifbares Spanermesser, insbesondere zur Herstellung von Vormaterial für Spanplatten, umfassend einen Messergrundkörper mit einer Spankante und zumindest ein von diesem Messergrundkörper getragenes, langgestrecktes, über die Spankante des Grundkörpers überstehendes und vorzugsweise dreieckähnlichen Querschnitt aufweisendes Ritzmesser. Erfindungsgemäß ist vorgesehen, daß die aufweisendes Ritzmesser. Erfindungsgemäß ist vorgesehen, daß die Ritzmesser (2) mit einer ebenen Anlagefläche (5) plan bzw. satt (stumpf) auf eine Tragfläche (6) des Messergrundkörpers (1) aufgesetzt und längs der Anlagekanten (3) durch Elektronen- oder Laserstrahlschweißen mit dem Messergrundkörper (1) schweißverbunden sind.

## Beschreibung

Die Erfindung betrifft ein nachschleifbares Spanermesser, insbesondere zu Herstellung von Vormaterial für Spanplatten, umfassend einen Messergrundkörper mit einer Spankante und zumindest ein von diesem Messergrundkörper getragenes langgestrecktes, über die Spankante des Grundkörpers überstehendes und vorzugsweise dreieckähnlichen Querschnitt aufweisendes Ritzmesser.

Derartige nachschleifbare Spanermesser sind bekannt und können in Vertiefungen des Messergrundkörpers eingesetzte Ritzmesser aufweisen, die in die Vertiefungen hart eingelötet werden. Durch das Hartlöten und die damit verbundene Erwärmung der Ritzmesser und wesentlicher Teile des Messergrundkörpers erfolgt jedoch eine nicht erwünschte Gefügebeeinflussung in den Ritzmessern, welche die Haltbarkeit der Spankante des Messergrundkörpers als auch die der Ritzmesser verringert. Darüberhinaus ist die Lötverbindung nicht übermäßig fest und es kommt oftmals zum Herausreißen der Ritzmesser.

Eine einstückige Herstellung derartiger Spanermesser ist ebenfalls bekannt, bedingt herstellungsmäßig aber großen Aufwand und ist demzufolge teuer.

Erfindungsgemäß werden diese Nachteile vermieden, wenn bei einem Spanermesser der eingangs genannten Art vorgesehen ist, daß die Ritzmesser mit einer ebenen Anlagefläche plan bzw. satt (stumpf) auf eine Tragfläche des Messergrundkörpers aufgesetzt und längs der Anlagekanten durch Elektronen- oder Läserstrahlschweißen, mit dem Messergrundkörper schweißverbunden sind.

Bei derartigen Spanermessern ist es möglich, den Messergrundkörper aus einem flachen Stahlband auszuformen und dieses zu härten; in ähnlicher Weise können die Ritzmesser vorab hergestellt und gehärtet werden; daraufhin erfolgt das Anlegen der Ritzmesser an den Messergrundkörper und ein lokal begrenztes Verschweißen mit Elektronen- oder Laserstrahl. Die beim Schweißen mit Elektronen- bzw. Laserstrahl auftretenden Gefügeänderungen bzw. -beeinflussungen längs der Schweißnaht sind lokal sehr begrenzt und sogar erwünscht, da in diesen lokalen Verbindungsbereichen die Zähigkeit der Werkstoffe erhöht wird und damit die im Betrieb stoßweise bzw. schlagartig beanspruchten Zonen höhere Zähigkeit bei ausreichender Festigkeit besitzen. Dieser Effekt kann auch durch Einführung von Metallen oder metallischen Verbindungen in den Schweißstrahl bzw. das Schmelzenband erhöht werden. An diesen belasteten Stellen wird dadurch auch die Dauerwechselfestigkeit durch das Gefüge hinaufgesetzt. Gleichzeitig bleiben jedoch der Messergrundkörper und der schweißnahtferne Teil bzw. der Schneidkantenbereich des Ritzmessers bezüglich ihrer Eigenschaften unverändert bzw. behalten ihre optimale Härte, da die Erwärmung beim Elektronen- bzw. Laserstrahlschweißen sehr begrenzt erfolgt.

Vorteilhaft ist es im Hinblick auf die Abnutzung auch, wenn vorgesehen ist, daß der Chromgehalt der Werkzeugstahllegierung und/oder die Härte der Ritzmesser höher ist/sind als die des Messergrundkörpers; gerade die Kanten der Ritzmesser sind höheren Belastungen ausgesetzt als die Spankante des Messergrundkörpers und diesen Bedingungen wird damit Rechnung getragen.

Vorteilhafte Ausführungsformen der Erfindung ergeben sich aus der folgenden Beschreibung, den Patentansprüchen und der Zeichnung.

Im folgenden wird die Erfindung anhand der Zeichnung näher erläutert; es zeigen Fig.1 eine schematische Ansicht einer mit erfindungsgemäßen Spanermessern bestückten Messertrommel, Fig.2 eine schematische Ansicht eines erfindungsgemäßen Spanermessers und Fig.3 und 4 schematische Detailschnitte.

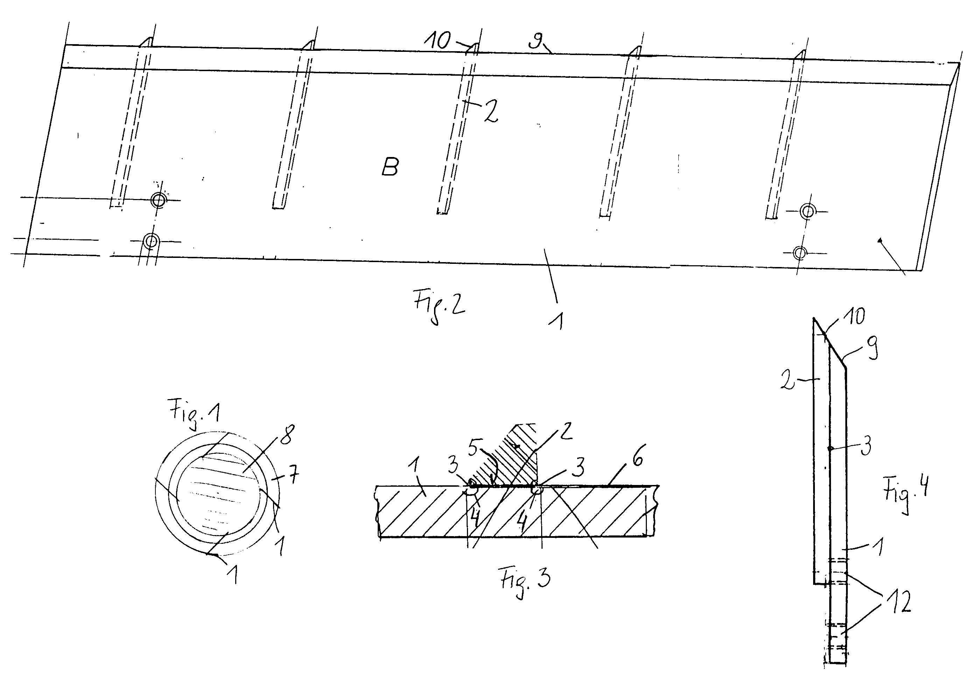

Fig. 1 zeigt schematisch einen Schnitt durch eine Trommel 7, die längs ihres Umfanges mit Spanermessern bestückt ist. Mit 8 ist ein Baumstamm angedeutet, der um seine Achse rotiert und von dem mittels der Spanmesser Späne abgehoben werden. Die Ritzmesser 2 ritzen bzw. heben Späne an, die von der Spankante 9 des Messergrundkörpers 1 abgeschnitten werden.

Fig.2 zeigt schmatisch ein erfindungsgemäßes Spanermesser mit einem Messergrundkörper 1 mit Schneidkante 9, der aufgeschweißte Ritzmesser 2 trägt, die vorspringende Ritzspitzen 10 besitzen.

Fig.3 zeigt einen Schnitt durch ein derartiges Spanermesser mit plan auf die Oberfläche 6 des Messergrundkörpers 1 aufgesetzten Ritzmessern 2, die mit ihrer Auflagefläche 5 stumpf am Messergrundkörper 1 aufliegen. Längs der Anlagekanten 3 der Ritzmesser 2 am Messergrundkörper 1 erfolgt ein Anschweißen des Ritzmessers 2 durch Elektronenstrahl- oder Laserstrahlschweißen. Die mit 4 angedeuteten Bereiche längs der Anlagekanten 3 erfahren dabei eine Gefügebeeinflussung, insbesondere in Richtung auf ein zäheres und wechsellastfesteres Gefüge, das vor allem in diesen Bereichen erwünscht ist

Fig.4 zeigt einen Schnitt durch einen Messergrundkörper 1 mit geschweißtem Ritzmesser, das mit seiner Ritzspitze 11 über die Schneidkante 9 des Messergrundkörpers 1 übersteht. Mit Befestigungslöchern 12 im Messergrundkörper 1 können derartige Messer an der Trommel 7 oder anderen Antriebseinheiten befestigt werden. Dieses erfindungsgemäße Spanmesser ist somit ohne weiteres nachschleifbar, wobei jedoch sowohl die Fertigung erleichtert als auch seine Haltbarkeit vergrößert sind.

Vorteilhaft ist es, wenn der Chromgehalt der Werkzeugstähle für das Ritzmesser 2 bzw. für den Messergrundkörper 1 und auch deren Rockwellhärte ähnlich sind, wobei jedoch der Chromgehalt und die Rockwellhärte des Ritzmessers 2 höher als die des Messergrundkörpers sein sollen. Vorteilhafterweise beträgt die Rockwellhärte des Grundkörpers 54-56 Hrc; die Rockwellhärte des Ritzmessers beträgt etwa 56-60 HRc.

Die prinzipielle Querschnittsform des Ritzmessers 2 ist nicht von sonderlicher Bedeutung und kann variiert werden; die Härte der Ritzspitze bzw. -kante des Ritzmessers 2 wird jedoch durch die Gefügebeeinflussung beim Elektronenstrahl- bzw. Laserstrahlschweißen nicht verändert, sodaß das Ritzmesser 2 seine Ausgangshärte auch im Betrieb besitzt.

## Patentansprüche

1. Nachschleifbares Spanermesser, insbesondere zur Herstellung von Vormaterial für Spanplatten bzw. von Holzspänen, umfassend einen Messergrundkörper mit einer Spankante und zumindest ein von diesem Messergrundkörper getragenes, langgestrecktes, über die Spankante des Grundkörpers überstehendes und vorzugsweise dreieckähnlichen Querschnitt aufweisendes Ritzmesser, dadurch gekennzeichnet, daß die Ritzmesser (2) mit einer ebenen Anlagefläche (5) plan bzw. satt (stumpf) auf eine Tragfläche (6) des Messergrundkörpers (1) aufgesetzt und längs der Anlagekanten (3) durch Elektronen- oder Laserstrahlschweißen mit dem Messergrundkörper (1) schweißverbunden sind.

2. Spanermesser nach Anspruch 1, dadurch gekennzeichnet, daß der Chromgehalt der Werkzeugstahllegierung und/oder die Härte, insbesondere Rockwellhärte, der Ritzmesser (2) höher ist bzw. sind als die des Messergrundkörpers (1).

3. Spanermesser nach Anspruch 1 oder 2, dadurch gekennzeichnet, daß die Zähigkeit der Werkzeugstahllegierung der Ritzmesser (2) und des Messergrundkörpers (1) im Bereich (4) der verschweißten Anlagekanten (3) durch die beim Schweißen erfolgte Wärmezufuhr gegenüber den anlagekantenfernen Bereichen erhöht ist.

4. Spanermesser nach einem der Ansprüche 1 bis 3, dadurch gekennzeichnet, daß im Zuge des Elektronen- oder Laserstrahlschweißens in den Schweißstrahl und/oder in das Schmelzenband Metalle und/oder metallische Verbindungen eingeführt bzw. abgelagert werden.
